Europäisches Patentamt

European Patent Office

Office européen des brevets

(19)

(11) Numéro de publication: **0 250 278 B1**

(12) **FASCICULE DE BREVET EUROPEEN**

(45) Date de publication du fascicule du brevet:
25.07.90

(51) Int. Cl.⁵: **B29C 67/20**, C08J 9/32, C08K 7/28

(21) Numéro de dépôt: 87401079.6

(22) Date de dépôt: 14.05.87

(54) **Nouveau matériau de remplissage et de flottabilité-procédé de fabrication et ensembles tubulaires incorporant ce matériau.**

(30) Priorité: 16.05.86 FR 8612460

(43) Date de publication de la demande:
23.12.87 Bulletin 87/52

(45) Mention de la délivrance du brevet:
25.07.90 Bulletin 90/30

(84) Etats contractants désignés:
BE DE GB IT

(56) Documents cités:
FR-A- 2 160 637
GB-A- 2 149 916
US-A- 3 740 454
US-A- 3 900 543

PATENT ABSTRACTS OF JAPAN,
vol. 9, no. 331 (C-321)[2054], 25 décembre 1985; &
JP-A-60 158 239 (MITSUI SEKIYU KAGAKU KOGYO
K.K.) 19-08-1985
CHEMICAL ABSTRACTS,
vol. 88, no. 4, 23 janvier 1978, page 38, abrégé
no. 23933n, Columbus, Ohio, US; T. KATAOKA et al.:
"Extrusion of filler/polymer by an elastic melt extrusion.
I. Construction of apparatus and preliminary test", &
SEN'I KOBUNSHI ZAIRYO KENKYUSHO KENKYU
HOKOKU 1976, 113, 33-42hloric acid to remove scale

(73) Titulaire: INSTITUT FRANCAIS DU PETROLE, 4, Avenue
de Bois-Préau, F-92502 Rueil-Malmaison(FR)

(72) Inventeur: Jarrin, Jacques, 31, rue du Gué,
F-92500 Rueil-Malmaison(FR)
Inventeur: Robert, Eric, 7, allée de la Cascade,
F-92500 Rueil-Malmaison(FR)

(56) Documents cités: (suite)
from heat exchangers", & K 000
CHEMICAL ABSTRACTS,
vol. 87, no. 16, 17 octobre 1977, page 53, abrégé
no. 118816v, Columbus, Ohio, US; &
JP-B-77 08 865 (AGENCY OF INDUSTRIAL SCIENCES
AND TECHNOLOGY) 11-03-1977

## Description

L'invention concerne un nouveau matériau du remplissage et de flottabilité, son procédé de fabrication, ainsi que des ensembles tubulaires incorporant ce matériau.

Un secteur technique auquel l'invention est particulièrement applicable est celui des matériaux de flottabilité intégrés dans les assemblages de câbles et/ou tubes de grands diamètres et utilisés dans les applications pétrolières sous marines, en particulier dans les liaisons fond-surface pour des profondeurs d'eau supérieures à 100 m.

L'assemblage de ces tubes ou câbles de grands diamètres permet de limiter les problèmes d'encombrement liés à l'ancrage, en particulier sur une plate forme pétrolière et également de mieux contrôler les phénomènes hydrodynamiques liés aux courants marins qui peuvent provoquer des enchevêtrements des câbles ou tubes flexibles s'ils sont posés isolément. Par contre le fait d'assembler ces câbles ou tubes flexibles peut faire apparaître un problème de charge ou de tension au point d'ancrage lorsque le poids de l'assemblage est trop important. Par tubes flexibles on entend des tubes réalisés par assemblage d'une ou plusieurs couches en matière plastique ou caoutchouc, éventuellement renforcé de fils métalliques (ou fibres synthétiques), destinées à assurer l'étanchéité aux fluides internes ou externes et à assurer la tenue des tubes en tension longitudinale.

De tels tubes flexibles sont fabriqués et commercialisés par exemple par la société COFLEXIP.

Le poids apparent de ces tubes pris isolément dans l'eau et plein d'eau peut varier de 10 à 200 kg par mètre, selon la structure du tube et la nature des armures de pression (métalliques ou composites).

L'assemblage de ces tubes flexibles conduit à des poids apparents dans l'eau plein d'eau qui peuvent être très élevés, selon la taille et le poids de chacun des tubes. L'assemblage est réalisé par toronnage des tubes et/ou câbles avec un pas de 5 à 10 m.

La présente invention est relative à la mise en place d'un nouveau matériau pour le remplissage des volumes vides de l'assemblage des câbles et ou tubes flexibles.

Ce nouveau matériau constitué de 20 à 50% en volume d'une charge creuse d'allègement comportant des micro-sphères du type "cendres volantes" apparaissant naturellement dans les suies des centrales thermiques fonctionnant au charbon pulvérisé, résistant à la compression hydrostatique et présentant une faible reprise en eau sous des pressions de l'ordre de 10 à 100 bar, et de 80 à 50% en volume d'un matériau constitué d'au moins 80% en poids d'un homo ou copolymère polyoléfinique ou polydioléfinique thermoplastique, présente l'avantage d'incorporer dans le faisceau lui-même, lors de la fabrication en usine ou de l'assemblage, une partie de la flottabilité nécessaire au faisceau. Il permet donc de limiter la flottabilité extérieure au faisceau qui est à mettre en place lors de la pose du faisceau en mer.

Le brevet FR-A 2 160 637 décrit un procédé pour fabriquer des articles légers utilisables pour les travaux sous-marins avec une matière synthétique thermoplastique ou thermotraitable contenant des micro-particules creuses d'une matière vitreuse.

Les caractéristiques de ce matériau de remplissage sont donc

— d'assurer une partie de la flottabilité, même en cas d'endommagement de la gaine externe du faisceau qui est toujours possible dans les outillages de manutention du faisceau, lors de la fabrication ou de la pose en mer. Ceci est obtenu grâce à une densité comprise entre 0,65 et 0,85 et une absorption d'eau limitée à quelques pour cent en poids sous pression hydrostatique supérieure à 10 bar.

— d'avoir des propriétés mécaniques (en particulier élasticité et résistance à la pression hydrostatique et uniaxale) compatibles avec l'application envisagée. En effet lors de la fabrication les faisceaux sont stockés sur des bobines dont le rayon est tel que des déformations de 5% sont induites dans le matériau de remplissage. De plus, lors des manipulations au cours des opérations de fabrication ou de pose, les faisceaux passent dans des trichenilles de tirage ou de maintien. La géométrie des patins de ces trichenilles et les forces nécessaires au tirage sont telles que des pressions uniaxiales de l'ordre de 50 bar s'exercent sur le matériau de remplissage.

Le problème de l'intégration de la flottabilité au sein d'un assemblage flexible de câbles et tubes eux-mêmes flexibles, pour des profondeurs d'eau supérieures à 100 mètres, ne semble pas avoir été réellement abordé.

Les solutions antérieures s'appliquent généralement à des tubes ou câbles pris isolément et consistent dans certain cas à fixer sur le tube ou le câble des blocs de flottabilité réalisés soit en mousse syntactique (voir par exemple le brevet US-A 4.255.524), soit en matériau expansé rigide. Ces deux types de matériaux sont rigides et ne peuvent donc s'intégrer au sein même de l'assemblage flexible lors de la fabrication et surtout du stockage sur bobine de l'assemblage flexible. Par ailleurs, outre leur coût élevé, la mise en place sur l'assemblage des blocs rigides de flottabilité ralentit les opérations d'immersion. Il est donc intéressant d'intégrer une partie de la flottabilité lors de la fabrication de l'assemblage, pour limiter au maximum la perte de temps liée à la fixation des blocs de flottabilité externe lors des opérations de pose en mer.

Pour des canalisations prises isolément, des solutions consistant à déposer par injection des matériaux plastiques expansés ont également été proposées pour assurer l'isolation thermique (par exemple, de la mousse polyuréthane selon le brevet DE-A 3110503).

Ce type de matériau présente généralement une élasticité et une densité très intéressantes, mais le compromis nécessaire entre l'élasticité et la résistance à la compression uniaxiale et hydrostatique les situe très défavorablement par rapport au matériau selon l'invention décrit ci-après.

Une autre proposition dans le même domaine consiste à enrouler après usinage des feuilles de PVC expansé rigide autour de la conduite prise isolément (FR-A 2.538.077). L'élasticité et l'étanchéité nécessaires peuvent éventuellement être assurées en intercalant entre des blocs ou billes de PVC expansé du caoutchouc allégé de microbilles de verre creuses (FR-A 2.557.671). Ces solutions présentent l'inconvénient majeur de nécessiter des opérations de mise en place très lourdes, puisqu'elles imposent un usinage préalable des blocs PVC et une préformation des modules de flottabilité à intégrer lors de l'assemblage des tubes ou câbles constituant le faisceau.

Une prospection relative à l'isolation des câbles électriques a par ailleurs revendiqué la possibilité de déposer une couche constituée d'un matériau thermoplastique avec une charge de microsphéres creuses (US-A 4.273.806). Selon la technique décrite dans ce brevet antérieur, il est nécessaire de réaliser un mélange préalable de la résine thermoplastique sous forme de granulés ou de poudre et des microbilles de verre à une température supérieure à la température de ramollissement de la résine, ce mélange étant effectué dans un mélangeur de type BRANBURY de façon à préparer un mélange homogène qui est alors granulé sans casse des microsphères et extrudé ou injecté à des températures très élevées (300,C pour du polypropylène dans les exemples 1 et 2 du brevet US antérieur).

Toutes les solutions précédemment citées s'appliquent à l'isolation thermique ou électrique de câbles ou de tubes pris isolément. Ces solutions n'associent jamais une possibilité de mise en oeuvre en continu et des caractéristiques compatibles avec une utilisation entant que matériau de flottabilité jusqu'à des profondeurs d'eau de 1000 m dans des assemblages de tubes ou câbles flexibles.

Au contraire, la présente invention permet d'associer dans un même matériau une mise en oeuvre en continu par simple extrusion précédée d'une étape de mélangeage de poudres et des caractéristiques mécaniques et physico-chimiques compatibles avec les conditions de manutention et d'utilisation des assemblages de tubes flexibles en faisceau.

Après mise en oeuvre le matériau selon l'invention présente une densité comprise entre 0,65 et 0,85, une élasticité supérieure à 10% de déformation, une résistance à la compression uniaxiale au moins égale à 60 bar et une absorption d'eau sous une pression de 50 bar inférieure à 5% en poids.

L'invention est illustrée par les figures annexées parmi lesquelles :

- la figure 1 représente schématiquement un assemblage de tubes flexibles,
- la figure 2 est une section droite selon S-S d'une structure tubulaire telle que celle représentée à la figure 1,
- la figure 3 illustre une structure plus complexe incluant quatre tubes flexibles et,
- la figure 4 illustre schématiquement un procédé de fabrication d'un assemblage de tubes flexibles incorporant le matériau selon l'invention.

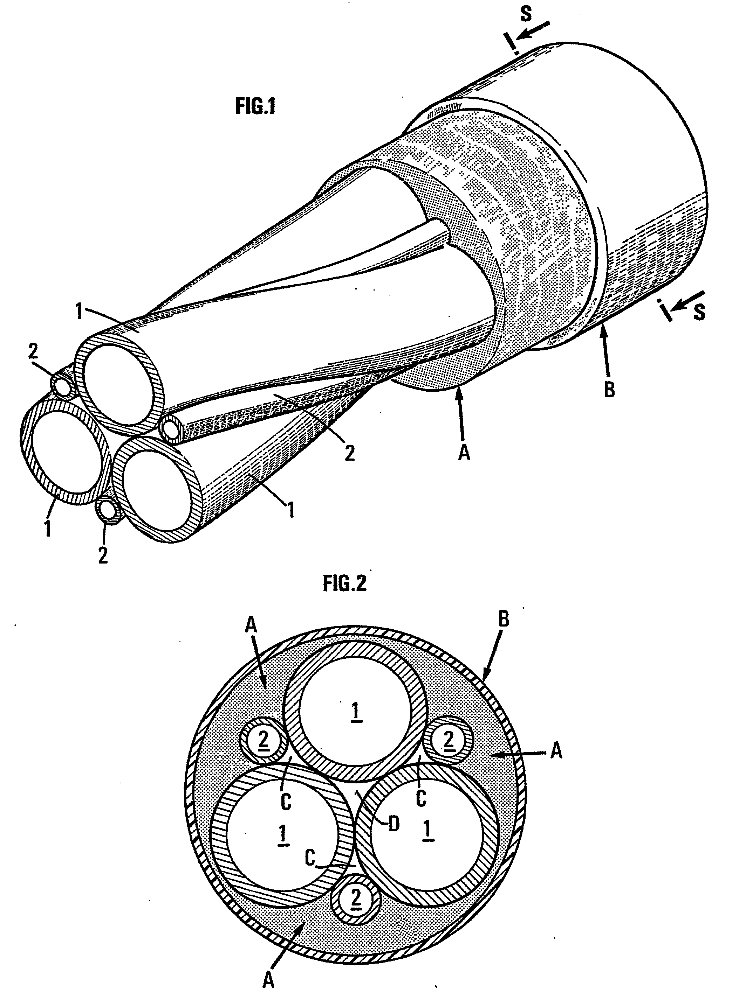

La figure 1 représente schématiquement un assemblage de tubes flexibles (1) et (2) incorporant le matériau de remplissage et de flottabilité selon l'invention (A). Ce matériau peut être déposé soit de manière à enrober totalement les tubes (cas de la figure 1), soit de manière à seulement combler les volumes compris entre les tubes. L'ensemble est recouvert par une gaine thermoplastique externe (B).

La figure 2 est une vue en section droite selon S-S d'une structure tubulaire telle que celle présentée à la figure 1. Cette figure montre un assemblage de trois tubes flexibles (1) de diamètre 1, 5 pouce et de trois tubes flexibles (2) de diamètre 4 pouces.

Cet assemblage est recouvert du matériau de l'invention (A) et d'une gaine thermoplastique externe (B). Par ailleurs, les volumes tels que (C) et (D) ne sont remplis d'aucun matériau.

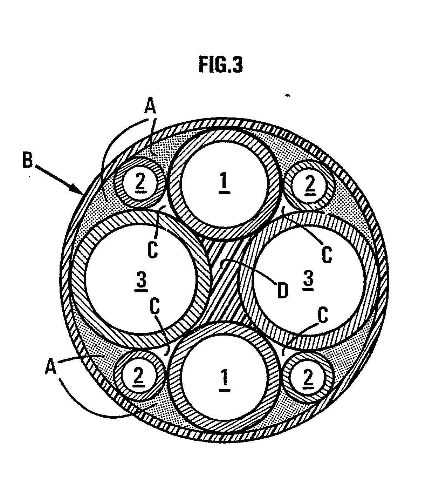

La figure 3 illustre une structure plus complexe incluant quatre tubes flexibles (2) de diamètre 1 pouce, deux tubes flexibles (1) de diamètre 4 pouces et deux ombilicaux hydrauliques (3). Cet assemblage est recouvert du matériau selon l'invention (A) et d'une gaine externe en matériau thermoplastique (B). De même que dans la structure précédente, les volumes (C) sont laissés vides ; au contraire, dans le but d'assurer la tenue de l'assemblage, le volume (D) est occupé par un noyau en matériau selon la présente invention ou constitué de tout autre matériau thermoplastique.

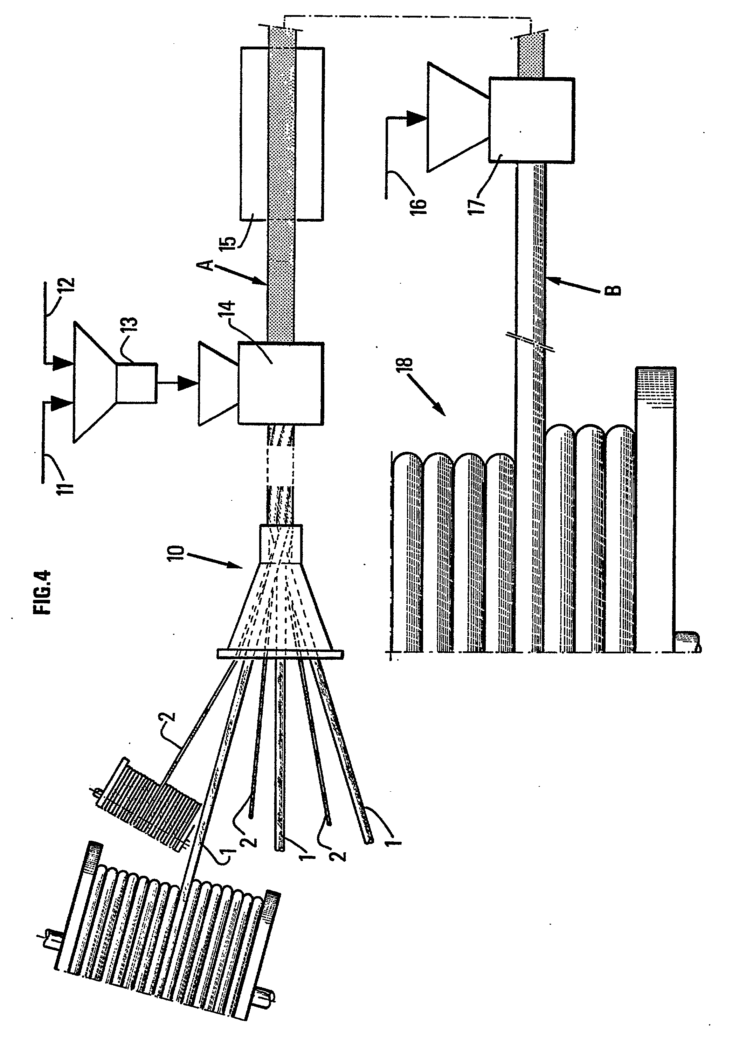

La figure 4 illustre schématiquement un procédé de fabrication d'un assemblage de tubes flexibles incorporant le matériau selon l'invention.

Ce procédé de fabrication d'une structure en faisceau incorporant le matériau de la présente invention comprend les étapes suivantes:

1) L'assemblage et le toronnage (10) des tubes flexibles et/ou câbles (1), (2) à associer au sein de la structure flexible.

2) Le mélangeage du matériau thermoplastique (11) et des microsphères d'allègement (12) dans un mélangeur (13) du type mélangeur à fût.

3) L'extrusion-bourrage (14) du matériau de la présente invention sur l'assemblage flexible défini à l'étape 1.

4) Le passage de l'assemblage recouvert du matériau selon l'invention dans un bac de calibration - refroidissement (15).

5) Le gainage du faisceau obtenu à la suite de l'étape 4 par un matériau thermoplastique (16) au travers de l'extrudeuse (17).

6) La réception du faisceau flexible sur la bobine de stockage (18).

Par résine thermoplastique, on entend des matériaux constitués d'au moins 80% en poids d'homopolymères ou copolymères à base d'éthylène ou de propylène ayant une densité comprise entre 0,90 et 0,94, contenant éventuellement tous les additifs spécifiques à ce type de matériau (antioxydant, anti UV, ...). La répartition granulométrique sera telle que 80% en poids des particules seront inférieures à 1 mm et que la taille moyenne des particules sera comprise entre 200 et 600$\mu$.

Par microsphères creuses on entend des microsphères d'origine naturelle commercialisées sous le nom de "cendres volantes" et qui proviennent d'un tri des suies récupérées dans les dépoussiéreurs des cheminées des centrales thermiques fonctionnant au charbon pulvérisé. Selon l'invention, les microsphères creuses ont la composition suivante :

| $SiO_2$: | 61% | $Al_2O_3$: | 25% | $Fe_2O_3$: | 3,3% | | |
|---|---|---|---|---|---|---|---|
| caO: | 0,2% | $K_2O$: | 3,4% | MgO: | 1,7% | indosé: | 5,4% |

leur densité vraie est de l'ordre de 0,68 et leur densité apparente de 0,42. La répartition granulométrique de ces microsphères est la suivante :

| refus cumulé | à | | $147\,\mu = 18\%$ |
|---|---|---|---|
| " | " | | $104\,\mu = 61\%$ |
| " | " | | $74\,\mu = 77\%$ |
| passant | à | | $74\,\mu = 23\%$ |

On réalise un mélange dans un mélangeur dit "à fût" de la quantité voulue de poudre de polyéthylène ou autre homo - ou copolymère polyoléfinique ayant les caractéristiques énoncées ci-dessus et de la quantité correspondante de cendres volantes. Ce mélange de poudres est réalisé à température ambiante en quelques minutes et ne présente pas de phénomène de ségrégation au stockage.

Le mélange obtenu est directement introduit dans la trémie d'une extrudeuse équipée d'une vis à faible taux de compression et d'une filière en tête d'équerre permettant l'extrusion-bourrage du matériau de remplissage tel que défini précédemment aux températures usuelles de mise en oeuvre des thermoplastiques utilisés et à des pressions inférieures à 100 bar environ à l'entrée de la filière.

Il est apparu de façon surprenante qu'une alimentation directe de l'extrudeuse avec un mélange de poudre de polyoléfine et de cendres volantes était plus favorable du point de vue de la casse des microsphères dans nos conditions d'extrusion qu'un mélange préalable à l'état fondu des mêmes ingrédients. Ce mélange, qui peut être suivi d'une granulation, multiplie en effet les possibilités de casse des microsphères.

Exemple 1 :

500 g d'un polyéthylène basse densité (d = 0,92 , MFI = 20 selon ASTM D 1238) à l'état de poudre de granulométrie moyenne égale à 300 $\mu$ est mélangé pendant 2 minutes dans un mélangeur à fût avec 246 g de cendres volantes telles que définies précédemment.

Le mélange est ensuite extrudé sur une machine monovis de diamètre 19 mm et de taux de compression 1, équipée d'une filière à jonc de diamètres successifs 3, 5 et 10 mm. Les températures affichées sur la machine sont respectivement de 130, 140 et 150°C sur le fourreau et 150°C pour la filière.

Les résultats obtenus sur le jonc sont présentés dans le tableau ci-dessous :

| Ø filière | Ω tr/mn | densité (1) | Comp uniax σR MPa (2) | Traction E MPa (3) | εR (%) (3) | absorp. eau 50 bar à 1000 h (%) (4) |
|---|---|---|---|---|---|---|
| 3 | 40 | 0,82 | — | — | — | — |
| 5 | 40 | 0,79 | 8,0 | 350 (2) | 16 (2) | 1,9 |
| 10 | 60 | 0,76 | 7,8 | 200 | 19 | 1,2 |
| 10 | 80 | 0,77 | 7,6 | 300 | 17 | 1,3 |

(1) densité mesurée au pycnomètre de HUBBARD dans l'alcool isopropylique

(2) éprouvette hors norme

(3) ASTM D 638

(4) jonc de longueur 300 mm

Exemple 2 :

500 g du polyéthylène de l'exemple 1 sont mélangés pendant 2 minutes dans un mélangeur à fût avec 333 g de cendres volantes. Le mélange est extrudé sur la machine monovis de l'exemple précédent équipée de filières à jonc de diamètre successivement 5 et 10 mm. Les conditions de températures sont inchangées par rapport à l'exemple 1.

| Ø filière | Ω tr/mn | densité | Comp uniax σ MPa (2) | Traction E MPa (1) | ε (%) (1) | absorp. eau 50 bar à 1000 h (%) |
|---|---|---|---|---|---|---|
| 5 | 40 | 0,77 | 6,4 | 180 (2) | — | 4,5 |
| 10 | 60 | 0,77 | 6,6 | 220 | 16 (2) | 2,2 ¨ |

(2) éprouvettes hors norme

(1) ASTM D 638

Exemple 3 :

Dans cet exemple les conditions d'extrusion sont celles des exemples 1 et 2. Le polyéthylène utilisé est également celui décrit dans les exemples précédents.

500 g de polyéthylène sont mélangés à respectivement 158 g (composition 1) et 269 g (composition 2) d'une fraction de cendres volantes telles que celles utilisées précédemment. Cette fraction est obtenue par flottation des dites cendres volantes avec du pentane. Après décantation nous récupérons une fraction surnageante dont les caractéristiques sont les suivantes :
- densité vraie de l'ordre de 0,54
- répartition granulométrique :

| refus cumulé | à | 154 μ | 11% |
|---|---|---|---|
| " | " | 103 μ | 51% |
| " | " | 65 μ | 86% |
| passant | à | 65 μ | 14% |

Les résultats obtenus sur chacune des compositions sont présentés dans le tableau ci-dessous.

| Ø filière | Ω tr/mn | densité | module traction MPa | allong. rupture (%) | absorp. eau 50 bar à 1000 h. (%) |
|---|---|---|---|---|---|
| Composition 1. | | | | | |
| 5 | 40 | 0,75 | – | – | 1,8 |
| 10 | 60 | 0,74 | 240 | 21 | 0,9 |
| Composition 2. | | | | | |
| 5 | 40 | 0,72 | – | – | 3,9 |

## Exemple 4

Dans cet exemple on a extrudé la composition n° 2 de l'exemple précédent à l'aide d'une vis à taux de compression 2,5, c'est-à-dire plus élevé que celui utilisé précédemment.

Les résultats obtenus avec une filière à jonc de diamètre 5 mm sont les suivants

| Ω tr/mn | densité | absorp d'eau 50 bar 1000 h (%) |
|---|---|---|
| 40 | 0,84 | 1,4 |
| 60 | 0,85 | 1,4 |

## Exemple 5 comparatif :

500 g d'un polyéthylène basse densité (d = 0,92 MFI 2,16/190 = 7 selon ASTM D 1238) à l'état de poudre sont mélangés pendant 2 minutes dans un mélangeur à fût avec 333 g (composition 1) ou avec 246 g (composition 2) de cendres volantes.

Le mélange est extrudé sur la machine monovis décrite précédemment et équipée des mêmes filières à jonc. Les températures des différentes zones du fourreau et de la filière sont également conservées.

Les résultats obtenus sont présentés dans le tableau ci-dessous.

| filière | tr/mn | densité | résist. rupture uniax. MPa | module traction MPa | allong. rupture (%) | absorp eau 50 bar à 1000 h. (%) |
|---|---|---|---|---|---|---|
| Composition 1. | | | | | | |
| 5 | 40 | 0,78 | – | – | – | 24 |
| 10 | 40 | 0,74 | 7,3 | 350 | 22 | 10 |
| Composition 2. | | | | | | |
| 10 | 60 | 0,78 | – | 300 | 30 | 4,1 |

Les essais comparatifs des exemples 3 et 4 montrent que lors de l'extrusion d'un mélange d'une poudre de polyéthylène et de cendres volantes, la casse des microsphères d'allègement peut être très sensiblement réduite par l'utilisation d'une vis à très faible taux de compression. Par ailleurs, les essais comparatifs des exemples 1, 2 et 5 montrent que les propriétés d'absorption d'eau sous pression hydrostatique du matériau extrudé se dégradent à mesure que le taux de charge en microsphères augmente, mais sont améliorées par l'utilisation d'un polyéthylène d'indice de fusion élevé.

## Exemple 6 :

500 g du polyéthylène de l'exemple 1 sont mélangés avec respectivement 88 g (composition 1) et 138 g (composition 2) de microsphères de verre B 38/4000 commercialisées par la société 3M. Le mélange est extrudé sur la machine monovis de l'exemple 1 équipée d'une filière à jonc de 10 mm. Les conditions de températures sont par ailleurs celles utilisées dans l'exemple 1.

Les résultats obtenus sur les joncs extrudés sont rassemblés dans le tableau ci-dessous.

| Ω tr/mn | densité | Résistance rupture uniaxale MPa | Module traction MPa | Allong. rupture (%) | absorp eau 50 bar 1000 h (%) |
|---------|---------|--------------------------------|--------------------|---------------------|------------------------------|
| Composition 1. | | | | | |
| 60 | 0,70 | 6,5 | 205 | 26 | 1,4 |
| Composition 2. | | | | | |
| 60 | 0,64 | 7,0 | 250 | 7 | 1,9 |

Exemple 7 :

On a extrudé à une température de filière égale à 170°C, sur la machine monovis décrite précédemment et équipée d'une filière à jonc de diamètre 10 mm, un mélange de 500 g d'un caoutchouc thermoplastique styrène-butadiène-styrène commercialisé par la société SHELL sous le nom de CARIFLEX TR et de 250 g de cendres volantes. Le caoutchouc est préalablement réduit en poudre par broyage cryogénique.
La densité mesurée sur le matériau ainsi obtenu est égale à 0,81.

**Revendications**

1. Matériau de remplissage et de flottabilité comprenant un matériau thermoplastique et une charge d'allègement minérale ou organique résistant à la pression hydrostatique, le matériau comprenant de 50 à 80% en volume d'un homo- ou copolymère polyoléfinique ou polydioléfinique et de 50 à 20% en volume d'une charge creuse d'allègement résistant à la pression hydrostatique, caractérisé en ce que ladite charge d'allègement comporte des microsphères du type "cendres volantes" apparaissant naturellement dans les suies des centrales thermiques fonctionnant au charbon pulvérisé.

2. Procédé de fabrication d'un matériau selon la revendication 1, caractérisé en ce que l'on réalise à température ambiante un mélange (11) de poudre d'homo- ou de copolymère polyoléfinique et de microsphères creuses, puis en ce que l'on réalise l'extrusion (17) de ce mélange à l'aide d'une vis à très faible taux de compression à travers une filière, à une température habituelle pour l'extrusion de la matrice thermoplastique considérée.

3. Structure tubulaire comprenant une pluralité de tubes ou câbles assemblés en faisceau, l'ensemble étant recouvert d'une gaine externe en matériau thermoplastique, la structure comprenant un matériau (A) de remplissage et de flottabilité comprenant un matériau thermoplastique et une charge d'allègement minérale ou organique résistant à la pression hydrostatique, ce matériau (A) de remplissage et de flottabilité comprenant de 50 à 80% en volume d'un homo- ou copolymère polyoléfinique ou polydioléfinique et de 50 à 20% en volume d'une charge creuse d'allègement résistant à la pression hydrostatique, caractérisé en ce que ladite charge d'allègement comporte des microsphères du type "cendres volantes" apparaissant naturellement dans les suies des centrales thermiques fonctionnant au charbon pulvérisé, ledit matériau (A) étant incorporé entre les tubes ou câbles (1, 2, 3).

4. Procédé de réalisation d'une structure tubulaire par assemblage de tubes ou câbles en faisceau, l'ensemble étant ensuite recouvert d'une gaine externe en matériau thermoplastique, caractérisé en ce que l'on incorpore par extrusion-bourrage entre ces tubes ou câbles (1, 2, 3) un matériau (A) de remplissage et de flottabilité comprenant un matériau thermoplastique et une charge d'allègement minérale ou organique résistant à la pression hydrostatique, ce matériau (A) de remplissage et de flottabilité comprenant de 50 à 80% en volume d'un homo- ou copolymère polyoléfinique ou polydioléfinique et de 50 à 20% en volume d'une charge creuse d'allègement résistant à la pression hydrostatique, et en ce que ladite charge d'allègement comporte des microsphères du type "cendres volantes" apparaissant naturellement dans les suies des centrales thermiques fonctionnant au charbon pulvérisé.

**Patentansprüche**

1. Schwimmfähiger Füllstoff mit einem thermoplastischen Material und einer mineralischen oder organischen, gegen hydrostatischen Druck beständigen Entlastungscharge bzw. Leichterungscharge, wobei das Material 50 bis 80 Vol.-% eines Polyolefin- oder Polydiolefinhomo- oder Copolymers und 50 bis 20 Vol.-% einer hohlen gegen hydrostatischen Druck beständigen Entlastungs- bzw. Leichterungscharge umfaßt, dadurch gekennzeichnet, daß diese Entlastungscharge Mikrokügelchen vom Typ "Flugaschen" umfaßt, die auf natürlichem Wege in den Rußen der mit Kohlenstaub betriebenen Wärmekraftanlagen auftreten.

2. Verfahren zum Herstellen eines Materials nach Anspruch 1, dadurch gekennzeichnet, daß man bei Umgebungstemperatur ein Gemisch (11) aus Polyolefinhomo- oder Copolymerpulver und hohlen Mikrokügelchen herstellt und dann die Extrusion (17) dieses Gemisches mit Hilfe einer Schnecke von sehr geringem Kompressionsgrad durch eine Düse bei einer für die Extrusion der betrachteten thermoplastischen Matrix üblichen Temperatur durchführt.

3. Rohrkonstruktion mit einer Vielzahl von bündelartig zusammengefaßten Rohren oder Kabeln, wobei das Ganze mit einer Außenhülle aus thermoplastischem Material überdeckt ist und die Konstruktion ein Material (A) mit Füll- und Schwimmfähigkeit umfaßt, das seinerseits ein thermoplastisches Material und eine mineralische oder organische gegen hydrostatischen Druck beständige Entlastungscharge umfaßt, wobei dieses schwimmfähige Füllmaterial (A) 50 bis 80 Vol.-% eines Polyolefin- oder Polydiolefinhomo- oder Copolymers sowie 50 bis 20 Vol.-% einer hohlen gegen hydrostatischen Druck beständigen Entlastungscharge umfaßt, dadurch gekennzeichnet, daß diese Entlastungscharge Mikrokügelchen vom Typ "Flugaschen" umfaßt, die auf natürlichem Wege in den Rußen aus mit Kohlenstaub betriebenen Wärmekraftanlagen auftreten, wobei dieses Material (A) zwischen die Rohre oder Kabel (1, 2, 3) eingebaut ist.

4. Verfahren zum Herstellen einer Rohrkonstruktion durch bündelartiges Zusammenfassen von Rohren oder Kabeln, wobei das Ganze dann mit einer Außenhülle aus thermoplastischem Material abgedeckt wird, dadurch gekennzeichnet, daß man durch Extrusion-Stopfen zwischen diese Rohre oder Kabel (1, 2, 3) ein schwimmfähiges Füllmaterial (A) einbaut, das seinerseits ein thermoplastisches Material sowie eine mineralische oder organische gegen hydrostatischen Druck beständige Entlastungscharge einbaut, wobei dieses schwimmfähige Material 50 bis 80 Vol.-% eines Polyolefin- oder Polydiolefinhomo- oder Copolymers sowie 50 bis 20 Vol.-% einer hohlen gegen hydrostatischen Druck beständigen Entlastungscharge umfaßt, und daß diese Entlastungscharge Mikrokügelchen vom Typ "Flugaschen" umfaßt, die auf natürlichem Wege in den Rußen der mit Kohlenstaub betriebenen Wärmekraftanlagen auftreten.

## Claims

1. Filling and buyancy material comprising a thermoplastic material and a mineral or organic lightening filler resistant to hydrostatic pressure, the material comprising between 50 and 80% by volume of a polyolefin or polydiolefin homo- or copolymer and between 50 and 20% by volume of hollow lightening filler resistant to hydrostatic pressure, characterised in that the said lightening filler comprises microspheres of the "flue dust" type appearing naturally in soot from thermal power stations operating on pulverised coal.

2. Method of manufacturing a material as claimed in claim 1, characterized in that a mixture (11) of polyolefin homo- or copolymer powder and hollow microspheres is produced at ambient temperature, and then in that extrusion (17) of this mixture is carried out using a screw with a very low compression ratio through a die, at a temperature which is normal for extruding the thermoplastic matrix in question.

3. Tubular structure comprising a plurality of pipes or cables assembled in a bunch, the wole being covered with an external sheath of thermoplastic material, the structure comprising a filling and buoyancy material (A) comprising a thermoplastic material and a mineral or organic lightening filler resistant to hydrostatic pressure, the said filling and buyancy material (A) comprising between 50 and 80% by volume of a polyolefin or polydiolefin homo- or copolymer and between 50 and 20% by volume of a hollow lightening filler resistant to hydrostatic pressure, characterised in that the said lightening filler comprises microspheres of the "flue dust" type appearing naturally in soot from thermal power stations operating on pulverised coal, the said material (A) being incorporated between the pipes or cables (1, 2, 3).

4. Method for producing a tubular structure by the assembly of pipes or cables in a bunch, the whole then being covered with an external sheath of thermoplastic material, characterized in that between the said pipes or cables (1, 2, 3) a filling and buoyancy material (A) is incorporated by extrusion-packing, comprising a thermoplastic material and a mineral or organic lightening filler resistant to hydrostatic pressure, the said filling and buoyancy material (A) comprising between 50 and 80% by volume of a polyolefin or polydiolefin homo- or copolymer and between 50 and 20% by volume of a hollow lightening filler resistant to hydrostatic pressure, and in that the said lightening filler comprises microspheres of the "flue dust" type appearing naturally in soot from thermal power stations operating on pulverised coal.

EP 0 250 278 B1

**FIG.1**

**FIG.2**

# FIG.3

FIG.4